(19) **Europäisches Patentamt / European Patent Office / Office européen des brevets**

(11) **EP 4 592 971 A1**

(12) **EUROPEAN PATENT APPLICATION**

(43) Date of publication:
30.07.2025 Bulletin 2025/31

(51) International Patent Classification (IPC):
*G06V 10/80* (2022.01)   *G06V 20/59* (2022.01)
*G06V 40/20* (2022.01)

(21) Application number: 25153700.7

(22) Date of filing: **24.01.2025**

(52) Cooperative Patent Classification (CPC):
**G06V 20/59; G06V 10/80; G06V 40/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.01.2024 GB 202400900**

(71) Applicant: **Continental Automotive Technologies GmbH**
**30175 Hannover (DE)**

(72) Inventors:
• **Sanaei, Roozbeh**
**339780 Singapore (SG)**
• **Wong, VunPin**
**339780 Singapore (SG)**
• **Das, Mithun**
**339780 Singapore (SG)**

(74) Representative: **Continental Corporation**
**c/o Continental Automotive Technologies GmbH**
**Intellectual Property**
**Guerickestr. 7**
**60488 Frankfurt am Main (DE)**

(54) **AN IN-VEHICLE INFORMATION PROCESSING SYSTEM AND METHOD THEREOF**

(57) Disclosed is an in-vehicle information processing system and method thereof. The in-vehicle information processing system comprises at least one sensing device operable to obtain sensing data in relation to an observation scene. The system may further comprise a processor including a memory having a set of instruction stored thereon, the set of instructions stored thereon retrievable by the processor. The processor may further comprise a semantic model operable to generate an aggregated value in relation to at least one subject observed in the observation scene. In response to the aggregated value generated by a semantic model, the processor may be further operable to analyse a motion of the at least one subject observed in the observation scene. A computer product and a computer-readable medium for executing the computer product is also disclosed.

**FIG. 1**

EP 4 592 971 A1

**Description**

TECHNICAL FIELD

This disclosure relates to a system and method for processing in-vehicle information and more in particular, a system and method for processing sensing data from multiple sensing devices.

BACKGROUND

Occupant safety is an ongoing concern for motor vehicles and increasingly, vehicular application uses sensors to assist with determining actions and behaviours of occupants within passenger compartment of motor vehicles.
With the huge amount of data information collected from multiple sensors, it is eminent to increase efficient and accuracy of processing and understanding the data information collected in real-time, to achieve occupant safety.
The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

SUMMARY

A purpose of this disclosure is to at least ameliorate the problem of as discussed above, to yield meaningful and improve accuracy of understanding of sensing data, thereby providing the subject-matter of the independent claims.
Further purposes of this disclosure are set out in the accompanying dependent claims.
In an aspect of this disclosure, an in-vehicle information processing system is provided. The system may include at least one sensing device operable to obtain sensing data in relation to an observation scene. The system may include a processor including a memory having a set of instruction stored thereon, the set of instructions stored thereon retrievable by the processor. The processor may further comprise a semantic model operable to generate an aggregated value in relation to at least one subject observed in the observation scene. In response to the aggregated value generated by the semantic model, the processor may be further operable to analyse a motion of the at least one subject observed in the observation scene. Advantageously, the aforesaid configuration yields an in-vehicle information processing system to process sensing data received from multiple sources of sensing devices and to generate an aggregated value of the sensing data received from the multiple sources of sensing devices. More advantageously, using the aggregated value, the system may analyse a motion of at least one subject observed in an observation scene, of which the observation scene may be a passenger cabin.
In some embodiment, the semantic model may be further operable to generate the aggregated value in relation to at least one subject observed in the observation scene, of which the aggregated value includes a set of observation sensing data, the set of observation sensing data may further include one or more parametric data aggregated from the observation scene.
In some embodiment, the semantic model may be further operable to generate the aggregated value in relation to at least one subject observed in the observation scene, of which the aggregated value includes a set of latent sensing data, the set of latent sensing data may further include one or more parametric data extracted from the observation scene.
In some embodiment, the semantic model may be operable to generate the aggregated value in relation to at least one subject observed in the observation scene, using a combination of the set of observation sensing data aggregated and the set of sensing data extracted.
In some embodiment, the one or more parametric data may comprise at least one certain confidence value. In some embodiment the one or more parametric data may comprises at least one uncertain confidence value.
In some embodiment, the aggregated value generated by the semantic model may comprise an average confidence value generated from the one or more parametric data in relation to the at least one subject observed. The one or more parametric data may include at least one uncertain confidence value. An advantage of generating an average confidence value using at least one uncertain confidence value is to achieve a uniformly distributed value of the sensing data, for reducing error of feature aggregation, thereby achieving an in-vehicle information processing system which yields improved and/or more accurate results of analysing a motion of the subject observed.
In some embodiment, the aggregated value generated by the semantic model may comprise a spectrum of data in relation to the at least one subject observed. The spectrum of data may represent at least one uncertain confidence value of the one or more parametric data. An advantage of generating a spectrum of data using at least one uncertain confidence value is to achieve a uniformly distributed value of the sensing data, thereby reducing error of feature aggregation, thereby achieving an in-vehicle information processing system which yields improved and/or more accurate results of analysing a motion of the subject observed.

In some embodiment, the aggregated value generated by the semantic model may comprise a weighted confidence value. The weighted confidence value may be computed from the at least one certain confidence value of the one or more parametric data in relation to the at least one subject observed. The weighted confidence value may be normalised to achieve a uniformly distributed value of the sensing data.

In some embodiment, the aggregated value generated by the semantic model may comprise a confidence error value. The confidence error value may be a disparity between the set of observation sensing data and the set of latent sensing data extracted by the latent feature extraction model. An advantage of generating a confidence error value may be to identify a disparity or a differential value between the set of observation sensing data and the set of latent sensing data, thereby reducing error of feature aggregation, to achieve an in-vehicle information processing system which yields improved and/or more accurate results of analysing a motion of the subject observed.

In some embodiment, the at least one sensing device may comprise an imaging device, for example a standalone camera in communication with in-vehicle information processing system disclosed herein. In some embodiment, the at least one sensing device may comprise an imaging sensing device, for example an image sensor in communication with in-vehicle information processing system disclosed herein. In some embodiment, the at least one sensing device may comprise an in-vehicle camera of a driver monitoring system. In some embodiment, the at least one sensing device may comprise an in-vehicle camera of a passenger monitoring system.

In an aspect of this disclosure, an in-vehicle information processing method is provided. The method may comprise obtaining, by way of at least one sensing device, sensing data in relation to an observation scene and determining, by way of a processor, a motion of the at least one subject contained in the observation scene. The method may further comprise generating, by way of a semantic model, an aggregated value in relation to at least one subject observed in the observation scene. Determination of the motion of the at least one subject contained in the observation scene may be in response to the aggregated value generated by the semantic model. An advantage of the method disclosed herein is to utilise an aggregated value generated by a semantic model for processing sensing data received from multiple sources of sensing devices and for generating an aggregated value of the sensing data received from the multiple sources of sensing devices. More advantageously, using the aggregated value, the method analyses a motion of at least one subject observed in an observation scene, of which the observation scene may be a passenger cabin.

In some embodiment, the method may further comprise aggregating, by way of the semantic model, a set of observation sensing data from the sensing data obtained. Accordingly, the set of observation sensing data may be aggregated in a model in multiple size of the original sensed data.

In some embodiment, the method may further comprise extracting, by way of the semantic model, a set of latent sensing data from the sensing data obtained. Accordingly, the set of latent sensing data may be extracted for detailed analysis by the semantic model, to achieve sensor fusion of sensing data collected from multiple sources.

In some embodiment, the semantic model is operable to generate the aggregated value comprising average confidence value in relation to the at least one subject observed. In some embodiment, the semantic model is operable to generate the aggregated value comprising a spectrum of data in relation to the at least one subject observed. In some embodiment, the semantic model is operable to generate the aggregated value comprising a weighted confidence value in relation to the at least one subject observed. In most embodiment, the method may further comprises analysing the aggregated value generated by the semantic model by way of the processor, to determine a motion of the at least one subject observed in the observation scene.

In some embodiment, the method may further comprise generating, by way of the semantic model, a confidence error value between the set of observation sensing data and the set of latent sensing data.

In an aspect of this disclosure, a computer program product is provided. The computer program product may comprise instructions which, when the program is executed by a processor, may cause the processor to carry out the steps of an in-vehicle information processing method as disclosed herein.

In an aspect of this disclosure, a computer-readable medium is provided. The computer-readable medium may include a computer program product as disclosed herein.

Other objects, features and characteristics, as well as the methods of operation and the functions of the related elements of the structure, the combination of parts and economics of manufacture will become more apparent upon consideration of the following detailed description and appended claims with reference to the accompanying drawings, all of which form a part of this specification. It should be understood that the detailed description and specific examples, while indicating the non-limiting embodiments of the disclosure, are intended for purposes of illustration only and are not intended to limit the scope of the disclosure.

BRIEF DESCRIPTION OF DRAWINGS

The present disclosure will become more fully understood from the detailed description and the accompanying drawings, wherein:

FIG. 1 shows a schematic diagram of an in-vehicle information processing system.
FIG. 2a shows a flowchart of an in-vehicle information processing method.
FIG. 2b shows a flowchart of a semantic process of an in-vehicle information processing method.

In various embodiments described by reference to the above figures, like reference signs refer to like components in several perspective views and/or configurations.

DETAILED DESCRIPTION

It should be understood that like reference numerals identify corresponding or similar elements throughout the several drawings. It should be understood that although a particular component arrangement is disclosed and illustrated in these exemplary embodiments, other arrangements could also benefit from the teachings of this disclosure.

Hereinafter, the term "processing unit" used herein may broadly encompass a general-purpose processor, a central processing unit (CPU), a microprocessor, a digital signal processor (DSP), a controller, a microcontroller, a state machine, and so forth. Under some circumstances, a "processing unit" may refer to an application specific integrated circuit (ASIC), a programmable logic device (PLD), a field programmable gate array (FPGA), etc. The term "processing unit" may refer to a combination of processing devices, e.g., a combination of a DSP and a microprocessor, a plurality of microprocessors, one or more microprocessors in conjunction with a DSP core, or any other such configuration. The "processing unit" may include a memory, for loading a sequence of instruction, causing the "processing unit" to perform steps of actions. The term "memory" should be interpreted broadly to encompass any electronic component capable of storing electronic information. The term "memory" may refer to various types of processor-readable media such as random access memory (RAM), read-only memory (ROM), non-volatile random access memory (NVRAM), programmable read-only memory (PROM), erasable programmable read only memory (EPROM), electrically erasable PROM (EEPROM), flash memory, magnetic or optical data storage, registers, etc. "Memory" is said to be in electronic communication with a processor if the processor can read information from and/or write information to the memory. Memory that is integral to a processor is in electronic communication with the processor. Henceforth, the term "processing unit" may also be taken to encompass "system on chip" (SoC) which uses a single integrated circuit (IC) chip that contains multiple resources, computational units, processors and/or cores integrated on a single substrate. A single SOC may contain circuitry for digital, analog, mixed-signal, and radio-frequency functions, as well as any number of general purpose and/or specialized processors (digital signal processors, modem processors, video processors, etc.), memory blocks (e.g., ROM, RAM, Flash, etc.). Unless otherwise specifically stated, the "processing unit" is not limited to any specific combination of hardware circuitry and software, nor to any particular source for the instructions executed by the processing unit.

The term "confidence" used in the context herein may refer to a probability or likelihood of an event occurring, thus the term "confidence value" refers to at least one value computed or generated by a computer or processor, that provides an estimated value by applying a set of known or a set of unknown parameters. Henceforth, the term "confidence value" used in the context herein is an estimated value to determine accuracy of a resultant value.

The term "aggregated value" may refer a resultant value generated for use as a means to benchmark a likelihood of an event occurring in response to multiple values analysed. In the context herein, the multiple values analysed may include raw sensing data received from multiple sources and the "aggregated value" may include a sum, an average, a count, a weighted sum or a minimum value. The "aggregated value" or the resultant value generated may be processed by a computer or processor to map semantic visualisation of real-world data.

## System 100

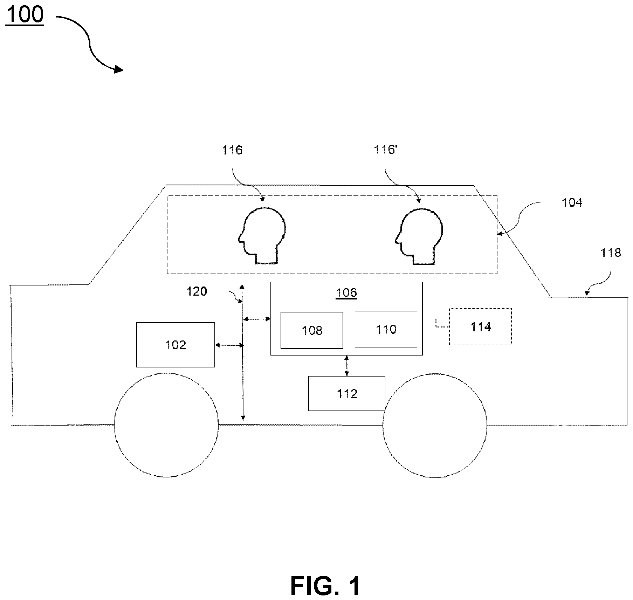

Referring to the accompanying drawings, FIG. 1 shows a schematic diagram of an in-vehicle information system 100. The system 100 may comprise at least one sensing device 102. Example of the at least one sensing device 102 may include an imaging device, such as a standalone camera, an imaging sensing device, for example image sensor, an in-vehicle camera of a driver monitoring system of a motor vehicle 118 or an in-vehicle camera of a cabin monitoring system of a motor vehicle 118. Suitable types of the at least one sensing device 102 may further include red, green, blue (RGB) sensor, time of flight (TOF) sensor and near infrared (NIR) sensor.

The system 100 may further include a processor 106, the processor 106 includes a memory 108, of which a set of instruction may be stored thereon, the set of instructions stored thereon may be retrievable by the processor 106. The processor 106 may further include a semantic model 110. The semantic model 110 may be operable to generate a resultant value or an aggregated value 112 in relation to at least one subject 116, 116' observed in the observation scene 104. In the response by the aggregated value 112 generated by the semantic model 110, the processor 106 may be further operable to analyses a motion of the at least one subject 116, 116' observed in the observation scene 104. In some embodiment, the at least one subject 116 may be a vehicle operator. In some embodiment, the at least one subject 116; may be a vehicle occupant or passenger. In some embodiment, the observation scene 104 may be a cabin of a motor vehicle 108 as shown in FIG. 1. The at least one sensing device 102, the processor 106 and the aggregated value generated are in communication with a vehicle bus 120. The aggregated value may be used to semantically understand a motion of the at least one subject 116, 116' observed in the observation scene 104. The motion of the at least one subject 116, 116' determined by the processor 106 may be transmitted to other sub-systems in the motor vehicle 118 through the vehicle bus 120. Optionally, the aggregated value 112 generated may be used to map an aggregation model comprised in the processor 106, in relation to raw sensing data received from the at least one sensing device 102 visualise real-world data observed in the observation scene 104.

In some embodiment, the processor 106 may be a stand-alone processor. In some embodiment, the processor 106 may a system on chip. In some embodiment, the system 100 may include one or more processors operable to generate the aggregated value 112.

## Semantic Model 110

The semantic model 110 may be operable to generate the aggregated value in relation to the at least one subject 116, 116' observed in the observation scene 104, of which the aggregated value 112 may be generated using a set of observation sensing data and a set of latent sensing data. The set of observation data may include one or more parametric data aggregated in a model multiple size of the original sensing data. Consequently, one or more parametric data aggregated by in the model may include at least one certain confidence value and/or at least one uncertain confidence value. On a similar note, the set of latent sensing data may be extracted from the sensing data by the semantic model 110 may comprise at least one certain confidence value and/or at least one uncertain confidence value. A main advantage of the present disclosure is to provide a uniformly distributed value of the sensing data, thereby reducing error of feature aggregation.

The semantic model 110 may define a set of physically interpretable variables or observable variables from the observation scene 104 to generate the set of observation sensing data. These observable variables may be defined by applying a mathematical model,

$$\tilde{z} = F(\tilde{o}),$$

where $\tilde{o}$ vector represents a vector of the set of observation sensing data and $\tilde{z}$ denotes a vector of latent sensing data in the semantic model 110. F denotes the set of equations that correlates the set of latent sensing data to the set of observation sensing data. Henceforth, the joint vector of $\tilde{T}(o) = [\tilde{o}; F(\tilde{o})]$, can be then considered as set of transformed variables, or an aggregated value that may be input to the processor 106 to determine a motion of the at least one subject 116, 116' observed in the observation scene 104. In the context herein, $\tilde{T}$ denotes the concatenation of two vectors (i.e. appending one vector at the end of another).

In some embodiment, at least one uncertain confidence value may be computed by the semantic model 110, such that the processor 106 may be operable to generate the aggregated value 112. In the context herein, $F(\tilde{o})$ vector may be computed to derive a mean value of the set of latent sensing data, to yield an average confidence value in relation to the at least one subject 116, 116' observed in the observation scene 104.

In some embodiment, the $F(\tilde{o})$ may be derived as a close-form algebraic equation. The at least one of $F(\tilde{o})$ generated by the semantic model 110 may be obtained based on uncertianties of $\tilde{o}$ values from $F(\tilde{o})$ close form equation through deriving $\ddot{F}^{-1}(\tilde{o})$ by applying fuzzy arithmetic, to yield a spectrum of data in relation to the at least one subject 116, 116' observed in the observation scene 104. $\ddot{F}^{-1}$ denotes fuzzy operation assigned to $F$ to calculate at least one certain confidence value, $F^{-1}(x)$ from certainty of $x$.

In some embodiment, aggregation process may be performed by calculating a weighted sum of one or more parametric data from the observation sensing data multiplied by at least one certain confidence value. The weight sum may be normalised by dividing the weighted sum to total value of the at least one certain confidence value. In the aforesaid embodiment, the mathematical equation may be represented by

$$\sum_{i=0}^{N} \left( \ddot{T}_i * T_i \right).$$

Where

* denotes element-wise multiplication of two vectors,
index $i$ represent the index I associated to a source of the raw sensing data received from the at least one sensing device 102 used in the observation scene 104. In other words, index I is the $i_{th}$ sensing device 112 used in the system 100, of which, index I may be 1 to refer to a first sensing device (1st), a second sensing device (2nd), a third sensing device (3rd), a fourth sensing device (4th) and so on. double dot represents at least one uncertain confidence value.

In some embodiment where constraints in the semantic model 110 algorithm may be conditioned in the form of $a_i \leq o_i \leq b_i$, the constrains may be imposed by setting $a_i \leq x_i \leq b_i$ by setting $\ddot{x}_i$ equal to zero.

In some embodiment confidence of the aggregated value 112 may be computed as an average of confidence in relation to the at least one subject 116, 116' observed in the observation scene 104, where the aggregated value 112 may be referred to as t in the following equation.

$$\ddot{T}_{fused} = \sum_{i=0}^{N} \ddot{T}_i / N$$

In some embodiment, a weighted sum or a weighted confidence value may be generated by the semantic model 110, to estimate a probability, such that the aggregated value 112 generated can be mapped to visualize and predict a motion of the at least one subject 116, 116'.

In some embodiment, the semantic model 110 may compare one or more parametric data from the set of observation sensing data with one or more parametric data from the set of latent sensing data, to yield a minimal difference or disparity between the two sets of sensing data, such that the fused sensing data may be defined as:

$$o_{fused} \text{ as value of o that minimize } \ddot{T}_{fused} * \left( T(o\ ) - T_{fused} \right)$$

The advantage of computing a minimal difference or disparity between the set of observation sensing data and the set of latent sensing data is to increase accuracy of visualizing the sensing data in the real-world. In the context herein, the minimal difference provides a form of ground truth information for the processor 106 to determine the accuracy of aggregated value 112 generated by the semantic model 110.

## Method 200

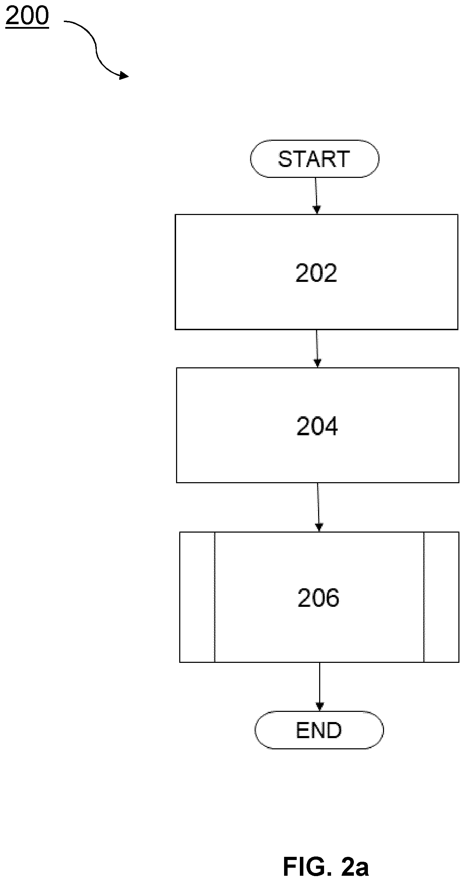

FIG. 2a shows a flowchart of an in-vehicle information processing method 200. In some embodiment, the method 202 may comprise obtaining sensing data in relation to an observation scene. The sensing data may be obtained by at least one sensing data.

In a next step 204, the method 202 may further comprise determining a motion of the at least one subject contained in the observation scene. In a next step 206, the method 200 may further comprise generating an aggregated value in relation to at least one subject observed in the observation scene. Consequently, the aggregated value generated may provide a semantical understanding of sensing data received from one or more sensing devices. In some embodiment, the method 200 may further comprise determining the motion of the at least one subject observed in the observation scene in response to the aggregated value generated. Therefore, the aggregated value generated by method 200 provides a visualization of the sensing data in relation to the at least one subject observed in the observation scene to comprehend and determine a motion of the at least one subject observed.

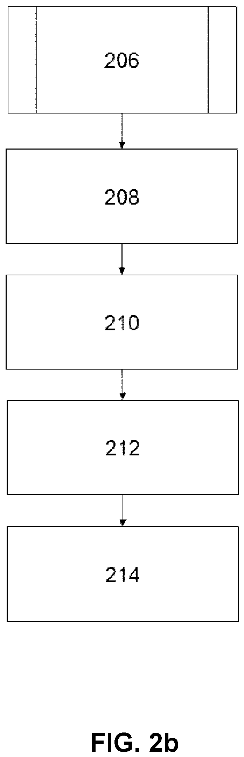

In some embodiment, the step 206 may be a process for determining the aggregated value, as shown in FIG. 2b, which includes a step 208 for aggregating a set of observation data from the sensing data received by the at least one sensing device. In some embodiment, the set of observation sensing data may be aggregated in a model multiple size of the original sensing data. The sensing data may be reduced dimensionally in subsequent steps to semantically comprehend the sensing data. In some embodiment, the step 206 may be a process for determining the aggregated value, which includes a step 210 for extracting a set of latent sensing data from the sensing data obtained from the at least one sensing data.

At step 212, the method 200 may further analysing the aggregated value generated. In some embodiment, the aggregated value generated may include an average confidence value in relation to the at least one subject observed. In some embodiment, the aggregated value generated may include a spectrum of data in relation to the at least one subject observed. In some embodiment, the aggregated value generated may include a weighted confidence value in relation to the at least one subject observed. The aforesaid embodiments may be executed by a semantic model retrievable from a processor having a memory for storing a set of instructions.

At step 214, the method 200 may further comprises generating a confidence error value between the set of observation sensing data and the set of latent sensing data.

In the above embodiments, the one or more parametric data aggregated to define the set of observation sensing data and/or extracted to define the set of latent sensing data may be correlated to, for example a human pose, to semantically comprehend the sensing data fused and determine a motion of the at least one subject 116, 116' observed in the observation scene 104.

For clarity and brevity, the aggregate value 112 may be generated by using human vectors for defining one or more parametric data may be understood from the following document, without departing from the scope of this disclosure proposed by the inventors:

- Konrad, S.G. and Masson, F.R., 2020, December. Pedestrian Skeleton Tracking Using OpenPose and Probabilistic Filtering. In 2020 IEEE Congreso Bienal de Argentina (ARGENCON) (pp. 1-7). IEEE.

The foregoing description shall be interpreted as illustrative and not be limited thereto. One of ordinary skill in the art would understand that certain modifications may come within the scope of this disclosure. Although the different non-limiting embodiments are illustrated as having specific components or steps, the embodiments of this disclosure are not limited to those combinations. Some of the components or features from any of the non-limiting embodiments may be used in combination with features or components from any of the other non-limiting embodiments. For these reasons, the appended claims should be studied to determine the true scope and content of this disclosure.

List of Reference Signs

| 100 | System |
| 102 | At least one sensing |
| 104 | Observation scene |
| 106 | Processor |
| 108 | Memory |
| 110 | Semantic model |
| 112 | Aggregated value |
| 114 | Aggregation model |
| 116, 116' | At least one subject |
| 118 | Motor vehicle |
| 120 | Vehicle bus |
| 200 | Flowchart |
| 202 | Obtaining sensing data |
| 204 | Determining a motion of at least one subject |
| 206 | Generating an aggregated value |
| 208 | Aggregating a set of observation sensing data |
| 210 | Extracting a set of latent sensing data |
| 212 | Analysing aggregated value generated by the semantic model |
| 214 | Generating a confidence error value |

**Claims**

1. An in-vehicle (118) information processing system (100) comprising:

   at least one sensing device (102) operable to obtain sensing data in relation to an observation scene (104); and
   a processor (106) including a memory (108) having a set of instruction stored thereon, the set of instructions stored thereon retrievable by the processor (106),

   **characterised in that** the processor (106) further comprises:

   a semantic model (110) operable to generate an aggregated value (112) in relation to at least one subject (116, 116') observed in the observation scene (104); and
   in response to the aggregated value (112) generated by a semantic model (110),
   the processor (106) is further operable to analyse a motion of the at least one subject (116, 116') observed in the observation scene (104).

2. The system (100) according to claim 1, **characterised in that**:

   the semantic model (110) is further operable to generate the aggregated value (112) in relation to at least one subject (116, 116') observed in the observation scene (104) comprising:

   a set of observation sensing data, the set of observation sensing data comprising one or more parametric data aggregated from the observation scene (104);
a set of latent sensing data, the set of latent sensing data comprising one or more parametric data extracted from the

observation scene (104),

or combination thereof.

3. The system (100) according to claim 2, **characterised in that**:
the one or more parametric data comprises:

at least one certain confidence value;
at least one uncertain confidence value,

or combination thereof.

4. The system (100) according to claims 1 - 3, **characterised in that** the aggregated value (112) generated by the semantic model (110) comprises:
an average confidence value generated from the one or more parametric data in relation to the at least one subject (116, 116') observed, wherein the one or more parametric data include at least one uncertain confidence value.

5. The system (100) according to claims 1 - 4, **characterised in that** the aggregated value (112) generated by the semantic model (110) comprises:
a spectrum of data in relation to the at least one subject (116, 116') observed, the spectrum of data representing the at least one uncertain confidence value of the one or more parametric data.

6. The system (100) according to claims 1 - 5, **characterised in that** the aggregated value (112) generated by the semantic model (110) comprises:
a weighted confidence value, wherein the weighted confidence value is computed from the at least one certain confidence value of the one or more parametric data in relation to the at least one subject (116, 116') observed.

7. The system (100) according to claims 1 -6, **characterised in that** the aggregated value (112) generated by the semantic model (110) comprises:
a confidence error value between the set of observation sensing data and the set of latent sensing data extracted by the semantic model (110).

8. The system (100) according to any of the preceding claims, **characterised in that** the at least one sensing device (102) comprises:

• an imaging device;
• an image sensing device;
• an in-vehicle camera of a driver monitoring system;
• an in-vehicle camera of a passenger cabin monitoring system;

or combination thereof.

9. An in-vehicle (118) information processing method (200) comprising:

obtaining (202), by way of at least one sensing device, sensing data in relation to an observation scene; and
determining (204), by way of a processor, a motion of the at least one subject contained in the observation scene,

**characterised by** that the method (200) further comprises:

generating (206), by way of a semantic model, an aggregated value in relation to at least one subject observed in the observation scene,
wherein
determining (204) the motion of the at least one subject observed in the observation scene is in response to the aggregated value (112) generated by the semantic model (110).

10. The method (200) of claim 9, **characterised by** that the method (200) further comprises:

aggregating (208), by way of the semantic model, a set of observation sensing data from the sensing data obtained;
extracting (210), by way of the semantic model, a set of latent sensing data from the sensing data obtained;

or combination thereof.

11. The method (200) of claims 9 - 10, **characterised by** that the method (200) further comprises:
analysing (212), by way of the processor, the aggregated value generated by the semantic model, wherein the aggregated value comprises:

◦ an average confidence value in relation to the at least one subject observed;
◦ a spectrum of data in relation to the at least one subject observed;
◦ a weighted confidence value in relation to the at least one subject observed,

or combination thereof.

12. The method (200) according to claims 9 - 11, **characterised by** that the method (200) further comprises:
generating (214), by way of the semantic model, a confidence error value between the set of observation sensing data and the set of latent sensing data.

13. A computer program product comprising instructions which, when the
program is executed by a processor (106), cause the processor (106) to carry out the method (200) of claims 9-12.

14. A computer-readable medium having stored thereon the computer program product of claim 13.

**FIG. 1**

200

```
        ┌──────────┐
        │  START   │
        └────┬─────┘
             │
             ▼
    ┌─────────────────┐
    │                 │
    │       202       │
    │                 │
    └────────┬────────┘
             │
             ▼
    ┌─────────────────┐
    │                 │
    │       204       │
    │                 │
    └────────┬────────┘
             │
             ▼
    ┌──┬───────────┬──┐
    │  │           │  │
    │  │    206    │  │
    │  │           │  │
    └──┴─────┬─────┴──┘
             │
             ▼
        ┌──────────┐
        │   END    │
        └──────────┘
```

**FIG. 2a**

**FIG. 2b**

Europäisches Patentamt
European Patent Office
Office européen des brevets

## EUROPEAN SEARCH REPORT

**Application Number**

EP 25 15 3700

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ESHED OHN-BAR: "In-vehicle hand activity recognition using integration of regions", 2013 IEEE INTELLIGENT VEHICLES SYMPOSIUM (IV) , 1 June 2013 (2013-06-01), pages 1034-1039, XP093164351, DOI: 10.1109/IVS.2013.6629602 ISBN: 978-1-4673-2754-1 Retrieved from the Internet: URL:https://ieeexplore.ieee.org/stampPDF/getPDF.jsp?tp=&arnumber=6629602&ref=aHR0cHM6Ly9pZWVleHBsb3JlLmllZWUub3JnL2Fic3RyYWN0L2RvY3VtZW50LzY2Mjk2MDI/Y2FzYV90b2tlbj1jV2ExVjA4bzVXd0FBQUFBOnRkMHBjQTRxR1lJJwVldYSFpjjQ1FBdHViVmJ6VDRacF92VHprb0dmRFYyyNndhOThraTQ3OC1BMFVQeTAya1VwMFBBbFFaZEVz<br>* abstract *<br>* figure 1 *<br>* section III.B * | 1-14 | INV. G06V10/80 G06V20/59 G06V40/20 |
| | ----- | | |
| A | HONGZE REN: "A Multi-Semantic Driver Behavior Recognition Model of Autonomous Vehicles Using Confidence Fusion Mechanism", ACTUATORS, vol. 10, no. 9, 31 August 2021 (2021-08-31), page 218, XP093164192, CH ISSN: 2076-0825, DOI: 10.3390/act10090218<br>* the whole document * | 1-14 | **TECHNICAL FIELDS SEARCHED (IPC)**<br><br>G06V |
| | ----- | | |

The present search report has been drawn up for all claims

| Place of search | Date of completion of the search | Examiner |
|---|---|---|
| The Hague | 18 March 2025 | Martinez, Francis |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Pedestrian Skeleton Tracking Using OpenPose and Probabilistic Filtering.. **KONRAD, S.G.** ; **MASSON, F.R.** 2020 IEEE Congreso Bienal de Argentina (ARGENCON). IEEE., December 2020, 1-7